# EUROPÄISCHE PATENTANMELDUNG

(11) **EP 1 025 948 A2**
(43) Veröffentlichungstag der Anmeldung: **09.08.2000**
(21) Anmeldenummer: 00101408.3
(22) Anmeldetag: 25.01.2000
(51) Int. Cl.: B23K 35/30

(54) **Schweisswerkstoff und seine Verwendung**

(30) Priorität: 01.02.1999 DE 19903791; 12.02.1999 DE 19905821; 12.02.1999 DE 19905822; 20.04.1999 DE 19917755
(71) Anmelder: CASTOLIN S.A., CH-1025 Lausanne - St. Sulpice (CH)
(72) Erfinder: Wabnegger, Johann, 1025 St. Sulpice (CH); Kretschmer, Ingo, Dr., 1028 Preverenges (CH); Junod, Michel, Dipl.-Ing., 1009 Pully (CH)
(74) Vertreter: Hiebsch, Gerhard F., Dipl.-Ing.

(57) **Zusammenfassung**

Ein Schweißwerkstoff auf Fe-Basis sowie Anteilen an Chrom und Mangan als Schweißgut enthält die folgenden Zusätze in Gew.-%: Mn etwa 20; Cr etwa 15; Mo etwa 0,3; N etwa 0,4; C etwa 0,03; das Schweißgut ist antimagnetisch und von hoher Festigkeit. Die Zugfestigkeit des Schweißwerkstoffes liegt zwischen 800 und 900 N/mm², bevorzugt bei etwa 850 N/mm², seine Streckgrenze zwischen 600 und 700 N/mm², bevorzugt bei etwa 640 N/mm². Die Härte des Schweißwerkstoffes beträgt etwa 300 HB 2,5.

## Beschreibung

Die Erfindung betrifft einen Schweißwerkstoff nach den Oberbegriffen der Patentansprüche 1 oder 4 und dessen Verwendung.

Ein Grundwerkstoff für Bohrgestänge an Erdbohrern für den untertägigen Bergbau oder die Erdölindustrie der Werkstoffbezeichnung P 550 weist die folgenden Eigenschaften auf
• chemische Zusammensetzung (in Gew.-%)

| **C** | **Mn** | **Cr** | **Mo** | **N** |
|---|---|---|---|---|
| max | 18,50- | 17,50- | max. | min |
| 0,07 | 20,00 | 19,00 | 0,45 | 0,50 |

• mechanische Gütewerte:

| | | |
|---|---|---|
| Zugfestigkeit | (N/mm²) | 1100; |
| Streckgrenze | (N/mm²) | 990; |
| Dehnung | (%) | 33; |
| Härte | HB 2,5 | 330. |

Auch in der Schiffbauindustrie -- etwa beim U-Bootbau -- sind Grundwerkstoffe im Einsatz, welche eine hohe Festigkeit, verbunden mit antimagnetischen und korrosionsbeständigen Eigenschaften, haben und zu verschweißen sind.

Auf dem Markt sind Schweißzusatzwerkstoffe bekannt, die entsprechend dem Grundwerkstoff gleiche oder ähnliche Festigkeitseigenschaften aufweisen; diese besitzen jedoch keine antimagnetischen Eigenschaften. Andererseits erreichen antimagnetische Schweißzusätze nicht die geforderten Festigkeitswerte.

Entsprechende Probleme entstehen bei nichtmagnetischen Beschichtungen zum Verschleißschutz von nichtmagnetischen Stählen. Auch der diesbezügliche Grundwerkstoff entspricht beispielsweise jenem Werkstoff "P550".

In Kenntnis dieses Standes der Technik haben sich die Erfinder das Ziel gesetzt, eine antimagnetische Schweißgutzusammensetzung mit hohen Festigkeitseigenschaften anzubieten, die beispielsweise für Schweißverbindungen an den beschriebenen Bohrgestängen eingesetzt zu werden vermag oder als Verschleißschutz auf Grundwerkstoffen der erwähnten Art.

Zuz Lösung dieser Aufgabe führen die Lehren der Patentansprüche 1 oder 5; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß wird ein Schweißwerkstoff auf Fe-Basis mit folgenden Zusätzen -- bevorzugt in Form eines Fülldrahtes -- eingesetzt:
Mn etwa 20 Gew.-%;
Cr etwa 15 Gew.-%;
Mo etwa 0,4 Gew.-%;
N etwa 0,4 Gew.-%;
C etwa 0,03 Gew.-%.

Das Schweißgut ist korrosionsbeständig, antimagnetisch und von hoher Festigkeit; seine mechanischen Gütewerte sind nach anderen Merkmalen der Erfindung:
- Zugfestigkeit zwischen 800 und 900/N/mm², bevorzugt von etwa 850 N/mm²;
- Streckgrenze zwischen 600 und 700 N/mm², bevorzugt von etwa 640 N/mm²;
- Härte von etwa 300 HB 2,5;
- Dehnung von etwa 30 %.

Das Schweißgut ist antimagnetisch und besitzt Festigkeitswerte, die über jene der antimagnetischen Schweißzusätze liegen, die zur Zeit in der Industrie verwendet werden.

Die Füllung des Fülldrahtes ist so aufgebaut, dass das Schweißgut mit entsprechenden Schweißparametern -- trotz des sehr hohen Stickstoffgehaltes im Schweißgut -- porenfrei herzustellen ist.

Dieser Schweißwerkstoff wird vorteilhafterweise für Schweißverbindungen im Schiffsbau oder an Bohrgestängen von Erdbohrern verwendet; nichtmagentische Eigenschaften -- bzw. magnetische Eigenschaften ähnlich der Atmosphäre -- werden im Bohrkopfbereich benötigt, um das örtliche Erdmagnetfeld nicht zu stören; an diesem orientieren sich nämlich die im Bohrkopfbereich eingebauten Messsonden. Diese Messorientierung wird vor allem bei Bohrungen benötigt, die nicht direkt über den kürzesten -- geraden -- Weg vorgetrieben werden, sondern über beliebige Umwege bzw. Kurven.

Im Rahmen der Erfindung liegt zudem ein Schweißwerkstoff zum Herstellen von harten -- bevorzugt selbstfließenden -- Ni-Basis-Panzerungen für eine nichtmagnetische Beschichtung als Verschleißschutz mit einem Chromgehalt von etwa 25 bis 40 Gew.-%. Ein solcher Schweißwerkstoff kann stattdessen auch einen Gehalt an Cr und Mo von 25 bis 40 Gew.-% aufweisen. Zudem mögen Metalloide wie B, Si, P und C zur Absenkung des Schmelzpunktbereichs sowie zur Erhöhung des Verschleißwiderstandes zugesetzt werden. Zur weiteren Erhöhung des Verschleißwiderstandes kann Wolframkarbid zugegeben werden.

Der Anwendungsbereich dieses Schweißwerkstoffes soll sich auf den Schutz von nichtmagnetischen Bohrgestängen bzw. Stabilisatoren bzw. Instrumentengehäusen im Bereich der Bohrköpfe erstrecken. Zur Bohrkopforientierungsmessung muss -- z. B. bei gezielten Bohrungen zu verschiedenen Lagerstättenabschnitten von einem Standort aus -- dieser Bereich unmagnetisch sein, um das als Messorientierung genutzte natürliche Erdmagnetfeld nicht zu stören. Nichtmagentische Eigenschaften -- bzw. Magnetische Eigenschaften ähnlich der Atmosphären -- werden im Borhkopfbereich benötigt, um das örtliche Erdmagnetfeld nicht zu stören; an diesem orientieren sich nämlich die im Bohrkopfbereich eingebauten Messsonden. Diese Messorientierung wird vor allem bei Bohrungen benötigt, die nicht direkt über den kürzesten geraden -- Weg vorgetrieben werden, sondern über beliebige Umwege bzw. Kurven.

## Patentansprüche

1. Schweißwerkstoff auf Fe-Basis sowie Anteilen an Chrom und Mangan als Schweißgut,
gekennzeichnet durch
folgende Zusätze in Gew.-%
Mn etwa 20;
Cr etwa 15;
Mo etwa 0,3;
N etwa 0,4;
C etwa 0,03,
wobei das Schweißgut antimagnetisch und von hoher Festigkeit ist.

2. Schweißwerkstoff nach Anspruch 1, gekennzeichnet durch eine Zugfestigkeit zwischen 800 und 900 N/mm², bevorzugt von etwa 850 N/mm², eine Streckgrenze zwischen 600 und 700 N/mm², bevorzugt von etwa 640 N/mm², und eine Härte von etwa 300 HB 2,5.

3. Schweißwerkstoff nach Anspruch 1 oder 2, gekennzeichnet durch eine Dehnung des Schweißgutes von etwa 30 %.

4. Schweißwerkstoff nach einem der Ansprüche 1 bis 3 in Form eines Fülldrahtes.

5. Schweißwerkstoff zum Herstellen von harten, selbstfließenden Ni-Basis-Panzerungen mit Chromgehalt als Verschleißschutz, gekennzeichnet durch Cr von etwa 25 bis 40 Gew.-% oder einen Gehalt an Cr und Mo von 25 bis 40 Gew.-% für eine nichtmagnetische Beschichtung.

6. Schweißwerkstoff nach Anspruch 5, gekennzeichnet durch den Zusatz von Mtalloiden wie B, Si und C.

7. Verwendung eines Schweißwerkstoffes nach einem der Ansprüche 1 bis 4 für Schweißverbindungen an Bohrgestängen von Erdbohrern oder im Schiffsbau.

8. Verwendung eines Schweißwerkstoffes nach Anspruch 5 oder 6 für Panzerungen an Bohrgestängen von Erdbohrern oder im Schiffsbau.
